Europäisches Patentamt

European Patent Office

Office européen des brevets

(19)

(11) Publication number: 0 240 850

A1

(12) EUROPEAN PATENT APPLICATION

(21) Application number: 87104431.9

(22) Date of filing: 25.03.87

(51) Int. Cl.4: F02C 5/06

(30) Priority: 08.04.86 PL 258866

(43) Date of publication of application:
14.10.87 Bulletin 87/42

(84) Designated Contracting States:
DE ES FR GB IT SE

(71) Applicant: Naczelna Organizacja Techniczna
Oddzial Krakowski, Zespol Uslug
Technicznych
ul. Straszewskiego 15
PL-31-113 Krakow(PL)

(72) Inventor: Grzywnowicz, Jan
ul. Zywiecka 36/6
PL-30-427 Kraków(PL)
Inventor: Grzywnowicz, Bartlomiej
ul. Zywiecka 36/6
PL-30-427 Kraków(PL)
Inventor: Pasich, Jerzy
ul. Os.Zlotego Wieku 65/48
PL-31-618 Kraków(PL)

(74) Representative: Finck, Dieter et al
Patentanwälte v. Füner, Ebbinghaus, Finck
Mariahilfplatz 2 & 3
D-8000 München 90(DE)

(54) An internal-combustion turbine engine, particularly for driving vehicles.

(57) An engine has piston compressor (20) driven via slow-down transmission (13) and (15) by the shaft of drive turbine (40). Combustion chamber (30) is a closed space connecting with cut-off valve (9) to the working chamber of piston compressor (20) and with relief valve (11) to drive turbine (40). The opening of cut-off valve (9) and relief valve (11) is mechanically controlled by the shaft of piston compressor (20). The spark-ignition engine, with spark plug (12) mounted in combustion chamber (30), has two independent suction systems of piston compressor (20), one of which having a unit for introducing fuel into the stream of the air being drawn in. Inlet valves (8) of the suction systems are mechanically controlled with alternating successive opening cycles by the shaft of piston compressor (20). The engine operates on two different thermodynamic transformations, the transformation of work with fuel combustion being followed by the engine cooling transformation.

FIG 1.

## An internal-combustion turbine engine, particularly for driving vehicles

The subject of this present invention is a turbine heat engine, wherein the exhaust gas obtained by burning a liquid or gaseous fuel is the working agent.

The basic components of the internal-combustion turbine engines from the viewpoint of energy are a drive turbine, a compressor and a combustion chamber, all fulfilling the function of an exhaust gas generator. As far as low powers of the order of up to 500 kW are concerned, the most common design involves a two-shaft engine according to Polish Patent Specification No. 68,314, whose design involves the coaxial and tandem arrangement of the two turbines mounted of the shaft that are not mechanically coupled. The first high-pressure one of these two turbines drives via a shaft an internal centrifugal air compressor and the second turbine mounted on an external power take-off shaft is a low-pressure drive turbine.

Compressed air is fed to open combustion chambers wherein fuel is continuously injected and burnt. The exhaust gas flowing in turn past the blades of high-and low-pressure turbine rotors transmit kinetic energy then converted to a driving force.

When the internal-combustion turbine engine is used for driving vehicles, it is necessary to apply a transmission slowing down the speed of the drive turbine shaft at the engine output. The designs of the previous turbine engines are very complicated technically and technologically difficult and expensive.

A particular problem considerably complicating the construction is to cool and lubricate highly thermally loaded components.

By way of example, a frequent design feature of the cooling system is to feed air through an axial opening inside the turbine shaft and to distribute it radially to the inside of the blades. Cooling is little efficient, which compells one to use expensive materials and complicated processes.

Also known are the designs of drive units involving the co-action between an internal-combustion engine and a turbine engine whose rotor is installed in the exhaust gas system. The turbine engine is then supplied with the working agent of pulsing pressure resulting from the combustion cyclicity in the piston engine.

The most frequently encountered among those designs is a turbo-supercharged piston engine in which the combustion turbine drives the rotor of the compressor increasing the load pressure in the piston engine inlet system.

The internal-combustion turbine engine as per this present invention is to eliminate the above-mentioned disadvantages by the development of a new design of simple process.

With that end in view the turbine engine has been equipped with a piston compressor driven via a slow-down transmission by the drive turbine shaft. The combustion chamber is a closed space connecting by a cut-off valve to the compressor working chamber and by a relief valve to the drive turbine. The opening of the cut--off valve and the relief valve is mechanically controlled by the piston compressor shaft. The basic engine design presented can be operated by the spark and automatic ignition of the mixture in the combustion chamber.

The spark-ignition engine has a spark plug mounted in the combustion chamber, whereas the compressor is provided with two independent suction systems terminating in inlet valves.

One of the above-mentioned systems has a unit introducing fuel into the stream of the sucked--in air. That unit, depending on the fuel used can be a carburettor or a low-pressure injector for a light liquid fuel or a mixer for a gaseous fuel.

The outlet valves are mechanically controlled by the piston compressor shaft in successive alternating opening cycles.

The compression-ignition engine as per this present invention has a diesel oil injector mounted in the combustion chamber and its injection is controlled by the compressor shaft at a fre quency of every second compression cycle.

In the turbine engine presented as per this present invention every thermodynamic conversion takes place at a different point whose construction is best adapted to the conditions of that conversion. The problem of overheating the turbine components has been eliminated by an alternating application of two different thermodynamic conversions. The work conversion involving fuel combustion is followed by a conversion without fuel supply and with clean air, which causes the internal walls of the compressor and combustion chamber to be cooled and the recovered heat to be converted to work in the turbine.

The engine is of simple construction, and besides, in spite of a high combustion temperature, the mean temperature inside the turbine and gas pipes in so low that it is not necessary to use special high-temperature resistent materials of construction. Power is taken from the compressor shaft rotating at speeds of the range appropriate for vehicle power plants, such as lorry power plants.

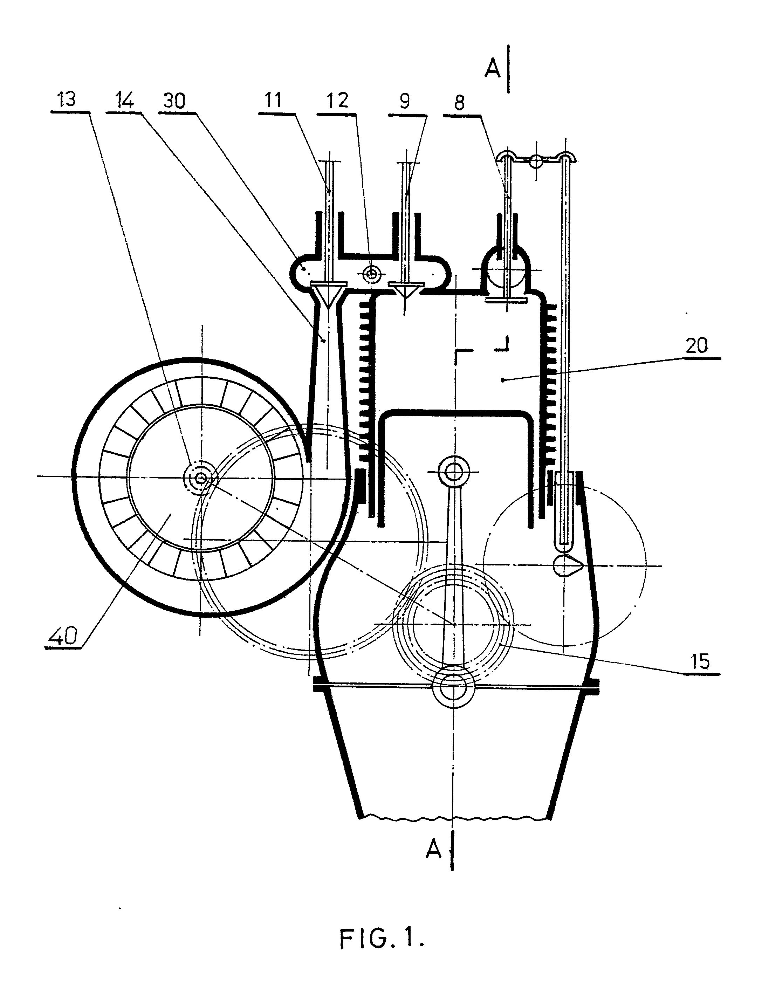

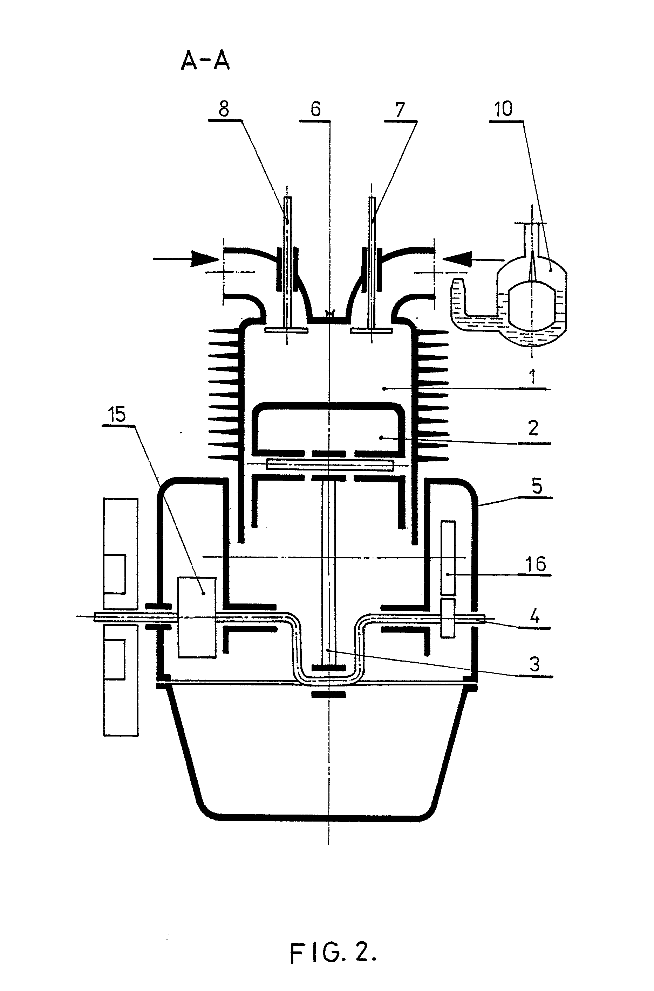

The complete understanding of this present invention will be enabled by the knowledge of a possible embodiment of the turbine engine shown diagrammatically in the drawing whose Fig. 1 shows a cross section of the engine and Fig. 2 shows an axial section of the piston compressor along line A-A of Fig. 1. The engine is of spark ignition type and fed with a light liquid fuel.

The basic engine assemblies are piston compressor 20, combustion chamber 30 and turbine 40 interconnected in the gas flow controlled by valve timing. Piston compressor 10 consists of cylinder 1, piston 2, connecting rod 3, crankshaft 4, body 5, head 6 provided with two inlet valves 7 and 8 and cut-off valve 9. Inlet valve 7 controls the air flow from the suction system where fuel introduction unit 10 in the form of a carburettor is installed, whereas the suction system of inlet valve 8 has no fuel atomiser.

Head 6 of piston compressor 20 mounts combustion chamber 30 provided with relief valve 11 and spark plug 12. Between relief valve 11 and drive turbine 40 there is nozzle 14. The shaft of drive turbine 40 is connected to crankshaft 4 of piston compressor 20 with toothed gearings 13 and 15.

In addition to the above, the engine has timing system 16 controlling the opening of inlet valves 7 or 8, cut-off valve 9 and relief valve 11.

The movement of piston 2 of piston compressor 20 in the direction towards the crankshaft causes the combustion mixture to be drawn to cylinder 1 through inlet valve 7. During the upward stroke the mixture is compressed and forced though open cut-off valve 9 to combustion chamber 30.

After piston 2 has passed though the dead point cut-off valve 9 becomes closed and the spark flash between the electrodes of spark plug 12 causes the ignition and combustion of the mixture in combustion chamber C.

Parallel with the above inlet valve 8 opens in cylinder 1 and clean air will be drawn in through it in the next stroke. After the crank of shaft 4 has rotated by about 15-25° relief valve 11 opens, the exhaust gas expands in nozzle 14 and flows at a high speed to drive turbine 40. Relief valve 11 is closed by timing system 16 only after two revolutions of crankshaft 4 of piston compressor 20. In the meantime, the clean air drawn into cylinder 1 of piston compressor 20.

After completion of about half the stroke of pistion 2 cut-off valve 9 begins to open and the slightly compressed cold air flows to combustion chamber 30 wherein it is heated by its walls and mixed with the remaining exhaust gas and flows through relief valve 11 to drive turbine 40. In moving past the blades of drive turbine 40 it gives off its energy, simultaneously cooling them. This no-fuel thermodynamic cycle takes place at low pressures and mechanical energy is developed by increasing volume. The gain in work is slight whereas the temperature of the walls of combustion chamber 30, relief valve 11, nozzle 14 and drive turbine is markedly lowered.

The design of compression ignition turbine engine with the mixture being ingited in combustion chamber 30 differs from that described above in the occurrence of a single suction system of the compressor and has inlet valve 8 which can be automatically pressure-controlled.

In combustion chamber 30 there is installed an injector or an injection unit combined in operation to the compressor cycle so that injection occurs at a frequency of every second compression cycle, thereby ensuring the occurrence of a double thermodynamic cycle.

## Claims

1. An internal-combustion turbine engine, particularly for driving vehicles, comprising a drive turbine and a compressor and a fuel combustion chamber forming an exhaust gas generator, characterised in that it has piston compressor (20) driven by slow-down transmission (13) and (15) by the shaft of drive turbine (40) and combustion chamber (30) is a closed space connected with cut-off valve (9) to the working chamber of piston compressor (20) and with relief valve (11) to drive turbine (40), the opening of cut-off valve (9) and relief valve (11) being mechanically controlled by the shaft of piston compressor (20).

2. An engine as per Claim 1, characterised in that piston compressor (20) has two independent suction systems terminating in inlet valves (7) and (8), one of which having a unit for introducing fuel (10) into the stream of the air being drawn in and, besides, inlet valves (7) and (8) being mechanically controlled by alternating successive opening cycles by the shaft of piston compressor (20), whereas plug spark (12) being installed in combustion chamber (30).

3. An engine as per Claim 1, characterised in that combustion chamber (30) accommodates a fuel injector whose injection is controlled by the shaft of piston compressor (20) at a frequency of every second compression cycle.

FIG. 1.

A-A

FIG. 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 288 981 (WRIGHT)<br>* whole document * | 1,3 | F 02 C 5/06 |
| A | | 2 | |
| | --- | | |
| X | US-A-1 357 993 (KEMMER)<br>* page 1, line 58 - page 2, line 127; figures 1-3 * | 1 | |
| | --- | | |
| X | FR-A- 809 644 (ROUSSELET)<br>* page 1, line 63 - page 2, line 60; figures 1, 2 * | 1 | |
| | --- | | |
| X | FR-A- 561 039 (GUERLAIN)<br>* page 1, line 49 - page 2, line 104; figures 1-4 * | 1 | TECHNICAL FIELDS SEARCHED (Int. Cl.4) |
| | ----- | | F 02 C 5/00 |

The present search report has been drawn up for all claims

| Place of search | Date of completion of the search | Examiner |
|---|---|---|
| BERLIN | 02-07-1987 | NORDSTROEM U.L.N. |